# EUROPEAN PATENT SPECIFICATION

(11) **EP 0 837 644 B1**
(45) Date of publication and mention of the grant of the patent: **16.12.1998**
(21) Application number: 96924116.5
(22) Date of filing: 05.07.1996
(51) Int. Cl.: A47J 43/26

(54) **DEVICE TO PROGRESSIVELY BREAK THE WOODY SHELL OF FRUITS OF THE DRUPE TYPE**
VORRICHTUNG ZUM PROGRESSIVEM ZERBRECHEN DER HÖLZERNEN SCHALE VON STEINFRÜCHTEN
DISPOSITIF CONCU POUR CASSER PROGRESSIVEMENT LA COQUE LIGNEUSE DE FRUITS DU TYPE A NOYAU

(30) Priority: 07.07.1995 IT TV950039 U
(43) Date of publication of application: 29.04.1998
(73) Proprietor: Rossi, Mario, 31057 Silea (IT)
(72) Inventor: Rossi, Mario, 31057 Silea (IT)
(74) Representative: D'Agostini, Giovanni, Dr.
(86) International application number: PCT/IT96/00138
(87) International publication number: WO 97/02779

(56) References cited:
- FR-A- 2 265 331
- US-A- 1 351 983
- US-A- 1 436 571
- US-A- 2 526 273
- US-A- 4 641 430

## Description

### Technical Field

This invention has as object a device to progressively break the woody shell (shell) of fruits of the drupe type.

The innovation, finds particular even if not exclusive application in the sector of kitchen tools and daily use household objects not excluded in table setting.

For example the walnut is known.

Tasty fruit, above all in the winter periods in our latitudes, is eaten for the greater part seasoned, or in some way submitted to drying processes, so as to be classified with good reason amongst dry fruits.

Filberts and peanuts, almonds as well as dates not from palms, also form part of this category.

A characteristic that joins them is given by the fact that they are put on the market in a particular condition, where the shell is eliminated, in the case of the walnut, the hull remains a robust woody shell (shell) that encompasses an edible pseudo-pulpous mesocarp substantially dry, in this case, the kernel.

The particular shape and fibrous structure of the shell, confers to the walnut a good mechanical resistance, so as to impose on the consumer, in order to have access to the kernel, the use of a suitable tool, better known as a nutcracker.

Utilized in a somewhat diffused way on all the tables of the world and practically always known, the nutcracker belongs to that family of kitchen tools having substantially maintained unaltered their own structure.

Changes can be observed, relatively to the design, or alternatively resorting to the use of plastic materials in place of the more common ones, such as metal.

But not excluding even the use of precious raw materials, whose destination as already seen, also has furniture features.

### Background Art

A nutcracker of the traditional type, is essentially made up of two specular levers obtaining a kind of jaw, hinged to a common end.

Each lever, provides on the inside a shape so as to be subdivided into two parts, respectively; a first next to the hinge to vice part of the fruit, and a second that realizes part of the handle.

In more detail, each lever can present a slightly arched shape, in such a way that along the upper board concerning the second part a convenient grip surface is offered, often knurled and somewhat extended.

This may be generally obtained also applying in a wrapping way non-skid plastic material.

Along the internal side compared to the two levers so coupled, and in proximity to the hinge, each lever has a hemispherical shape, still specular one to the other, in certain cases with a certain thickening, in such a way that reapproached define in a certain way the outline of a small walnut.

Variations can provide the presence of a second hemisphere, obtained adjacent to the first, generally of smaller size, to allow the breakage of the dry fruit shell having another size.

Finally, a toothing of certain importance, may be obtained along the border of both the clamping hemispheres, with the purpose to confer a greater grip capacity, then breakage of the shell.

Therefore the consumer, in this case, must open the two levers, an operation generally conducted with two hands, introduce in the suitable seat the walnut, while with the other hand one maintains open the nutcracker and therefore close the two levers so as to steadily hold the fruit.

At this point increasing progressively the force, one determines the breakage of the shell, until the total reapproach of the two opposed hemispheres.

The drawbacks of the present solution are known. Firstly, the fact that to compress the walnut with force, often one is not able to control the intensity, also because the giving-in of the shell is almost sudden, therefore the complete reapproach of the two levers is obtained.

This condition, in the best of hypotheses, determines a crack also of the kernel, which, because of the fact that it is dry, tends to shatter in small pieces of pulp mixed with the fragments of the shell.

To the consumer in conclusion, it does not remain other than to select one by one the more evident edible parts, throwing away all the rest.

Other than an obvious waste, the available tools for household use today, do not allow to maintain the kernel intact, for example, as when one requires to garnish a cake, therefore does not appear functional also under the profile of the aesthetic result.

A second drawback is due to the fact that in certain cases the shells are indeed resistant, to such an extent to determine a certain bending of the respective levers in the compression phase, without obtaining any breakage.

In that case, the consumer resorts to the use of two hands, with the fingers open and one opposite to the other, in order to exert a greater force, is the case for example of the subjects generally weaker, such as the elderly and women.

The result in conclusion, is a more uncontrolled giving-in of the shell fragmenting the kernel into numerous small pieces.

A third, but not last drawback is due to the excessive opening imposed by the nutcracker, since the respective jaws have viced the fruit.

The difficulty in exerting the force necessary to break the shell appears therefore inherent, as this must limit itself to the sole action of the fingers, substantially thumb-index, without wholly using the palm of the hand.

In the case of small hands, as those of children, breaking the nuts will result in an operation more difficult than anticipated, having to resort to the use of two hands, as illustrated above, or tending to approach the grip in proximity to the hinging, the latter condition beyond measure dangerous with the evident risk of injuring the fingers.

The aim of this invention is also that to avoid the above-mentioned drawbacks.

This and other aims are reached with this innovation according to the characteristics as in the included claims, solving the arising problems with a device for progressively breaking the woody shell, particularly of fruits of the drupe type, including a double handle, in which one is static and at least one is dynamic, the first, including on one side a seat essentially spoon shaped, to contain the fruit, longitudinally crossed by an opening; the second, being hinged to said first by the interposition of a movable breaking blade, and in which the blade provided with rack means is progressively abatable surpassing said spoon seat, by means of the recall, alternating at the release, of the dynamic handle that acts on one ratchet insisting on pivoting the blade, said blade, recalled also elastically in an original position, to be eventually disengaged by a second locking device provided along the static handle.

In this way, through the important creative contribution the effect of which realizes an immediate technical progress, different advantages are achieved.

Firstly, one allows the consumer to carry out the correct breakage of the shell, for example, walnut, modulating the force exerted on the handle of the jaw.

Consequently, other than a good stability and breaking precision, one leans towards a greater safeguarding of structural integrity of the kernel, avoiding the fragmentation (maintaining in good part the original aesthetic aspect) and without any waste of edible parts.

Additionally, it is not necessary to apply any excessive force, being therefore on one side utilizable also by weaker persons, on the other particularly easy to use as well as easy to grip.

Finally, considering the particularity of the structure it offers itself also as an exclusive object for a gift.

These, and other advantages will appear from the following specific description of a preferred solution, with the help of the enclosed schematic drawings whose details should not be intended as limitative but only illustrative.
Figure 1., represents a side view of a nutcracker.
Figure 2., represents a top view of the nutcracker in Figure 1., in the same operative condition.
Finally, figures 3. and 4., represent respectively the two main functional sequences, nutcracker as in Preceding figures, said views being obtained frontally.

Referring also to the Figures, we point out firstly that a device (A) for breaking, progressively, the woody shell or the shell of fruits of the drupe type (B), includes a double handle (a', a''), of which the first is static, the second is dynamic.

In more detail, the first handle (a'), on one side (1) supplies a generous sized grip surface, eventually formed anatomically, on the other provides on the inside in correspondence to an extremity a spoon shape (2) essentially divided in the middle by a longitudinal opening (3), so as to present a spoon shape.

Said spoon (2), in practice, offers a convenient seat to house the fruit (B) to be submitted to breakage, and along the internal surface is provided with a series of ribs or slots (4) in order to simplify clamping.

The second handle (a'') of the dynamic type, including on one side (5) a specular handle to the grip surface (1) of the first handle (a'), on the other, being hinged in (6) to said first handle (a') over the barycentre. The pivot (6) is placed therefore at the end of the actual and grip surface (1), coming between the latter and the starting of the spoon shape (2). A function of the pivot (6) is also that to hinge (7') a breaking blade (7) of a certain thickness, whose shape is slightly curved, by the opposite head ending substantially tapered.

The part of said blade (7) that is so hinged, able to rotate independently from the second handle (a''), is made up essentially of a wheel (7'), peripherally to which are obtained toothing (8).

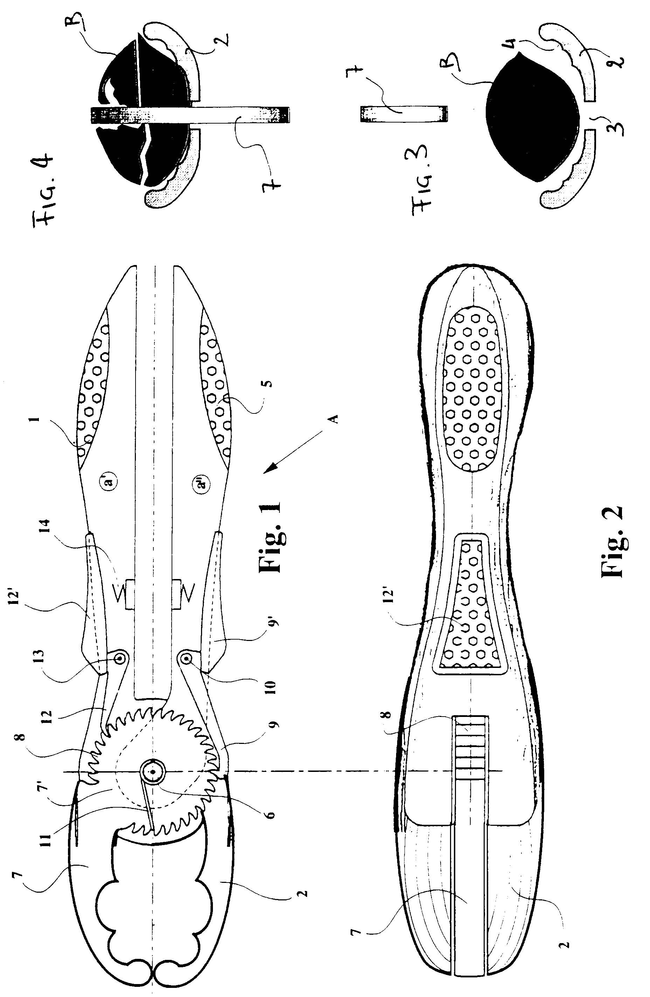

On the toothing (8), insists a harpoon (9), also elastically recalled (11), which is hinged in (10) on the handle (a''), on the other side (9') including a prolongation of the lever to allow, by simple pressure the disconnection (Fig. 1).

A second harpoon (12), hinged on the pivot (13) of the static handle (a'), insists, almost diametrically opposite to the preceding, on the corresponding toothing (8) of the same gear wheel (7').

Also in that case, said harpoon (12) elastically recalled, provides on the inside an extension (12') of the lever for disengagement of said harpoon from the wheel (7'). Finally, between the two hafts (a') and (a'') is provided a compression spring (14), whose end are anchored along the facing sides of the said two hafts (a', a'').

## Claims

1. Device to progressively break the woody shell of fruits of the drupe type, including a double handle, characterized in that the first handle is static (a') and at least the second handle is dynamic (a''), the first handle (a'), including on one side a seat essentially spoon shaped (2), to contain the fruit (B), longitudinally crossed by an opening (3); the second handle (a''), being hinged (9) to said first handle (a') by the interposition of a movable breaking blade (7), and in which the blade (7) provided with rack means is progressively abatable surpassing said spoon seat (2), by means of the recall, alternating at the release, of the dynamic second handle (a'') that acts on one ratchet insistent on the pivoting (7') of the blade, said blade (7), recalled also elastically in a native position, to be eventually unyoked by a second locking device (12) provided along the static first handle (a'').

2. Device, according to claim 1., characterised in that the first handle (a'), on one side (1) has a grip surface possibly shaped anatomically, on the other side provides on the inside in correspondence to an end, a spoon shape (2) essentially divided in the middle by a longitudinal opening (3), having the shape of a fork.

3. Device, according to claim 1. and 2., characterised in that the second handle (a'') is of the dynamic type, including on one side (5) a specular handle to the grip surface (1) of the first handle (a'), on the other side, being hinged (6) to said first handle (a') over the barycentre.

4. Device, according to claim 3, characterised in that the pivot (6) is made at the end of the grip surface (1), positioned between the latter and the start of the spoon shape (2).

5. Device, according to claim 3, characterised in that the pivot (6), independently from the second handle (a'') props the breaking blade (7), whose shape is slightly curved.

6. Device, according to claim 5, characterised in that the blade (7) so hinged, able to rotate independently from the second handle (a''), includes a wheel (7'), peripherally to which toothings are obtained (8).

7. Device, according to claim 6, characterised in that on said toothing (8), insists a first harpoon (9), also elastically recalled, which is hinged in (10) on the first handle (a'), on the other side (9') including a prolongation of the disconnection lever.

8. Device, according to claim 7, characterised in that a second harpoon (12), hinged to the pivot (13) on the static first handle (a'), insists on the correspondent toothing part (8) of the blade (7) .

9. Device according to claim 8, characterised in that said second harpoon (12) eventually elastically recalled, by the opposite side provides on the inside an extension (12') of the lever for disengagement of said harpoon by the wheel (7').

10. Device, according to any one of the preceding claims, characterised in that, between the two handles (a') and (a'') a compression spring is provided (14), the ends of which are anchored along the facing sides of the two handles (a', a'').

11. Device, according to any one of the preceding claims, characterised in that the spoon (2) on the internal surface, as well as the breaking blade (7) along the lower border, provide a series of clamping ribs or slots (4).

## Patentansprüche

1. Vorrichtung zum progressiven Aufbrechen der hölzernen Schalen von Steinfrüchten, die einen Doppelgriff haben, dadurch gekennzeichnet, daß der erste Griff statisch (a'), und wenigstens der zweite Griff dynamisch (a'') ist, der erste Griff (a'), der auf der einen Seite einen Auflager für die Aufnahme der Früchte (B) hat, vorwiegend in Kabelform (2), ist längst von einer Öffnung (3) durchquert; der zweite Griff (a'') durch einen Einschuß einer beweglichen Brechklinge (7) zu besagtem ersten Griff (a') drehbar (9), und in welchem die Klinge (7), versehen mit einem Rahmenmittel, progressiv kippbar ist und, mittels eines Rückzugs, abwechselnd zu einem Auslöser, über besagtem Kabelsitz (2) des zweiten dynamischen Griffes (a'') hinweggeht, der auf einer Sperre, welche auf dem Zapfen (7') der Klinge aufliegt, einwirkt, besagte Klinge (7), ebenso elastisch in der Ausgangsstellung zurückgezogen, eventuell durch ein zweites Schliessrmittel (12) gelöst ist, das auf dem ersten statischen Griff (a') vorgesehen ist.

2. Vorrichtung, nach Patentanspruch 1, dadurch gekennzeichnet, daß der erste Griff (a') auf der einen Seite (1) eine eventuell anatomisch geformte Haftfläche hat, auf der anderen Oberfläche sieht sie auf der Innenseite, einem Ende entsprechend, eine Kabelform (2) vor, im wesentlichen in der Mitte von einer Längstöffnung (3) unterteilt, die die Form einer Kabel hat.

3. Vorrichtung, nach den Ansprüchen 1 und 2, gekennzeichnend dadurch, daß der zweite Griff (a'') dynamisch ist und auf der einen Seite (5) einen Spiegelgriff zu der Haftoberfläche (1) zu besagtem ersten Griff (a') über einem Schwerpunkt drehbar (6) ist.

4. Vorrichtung, nach Anspruch 3, dadurch gekennzeichnet, daß der Zapfen (6) an dem Ende der Haftoberfläche gebildet und zwischen letzterer und dem Anfang der Kabelform (2) angebracht ist.

5. Vorrichtung, nach Anspruch 3, dadurch gekennzeichnet, daß der Zapfen (6), unabhängig vom zweiten Griff (a'') die Brechklinge (7) stützt, dessen Form leicht gekrümmt ist.

6. Vorrichtung nach den Anspruch 5, dadurch gekennzeichnet, daß die Klinge (7) so unabhängig von dem zweitem Griff (a'') drehbar, ein Rad (7'') beinhaltet, peripher zu welchem eine Zahnung (8) erhalten wird.

7. Vorrichtung nach Anspruch 6, dadurch gekennzeichnet, daß auf besagter Zahnung (8) eine erste Krampe (9) aufliegt, ebenso elastisch zurückgezogen, welche in (10) drehbar ist und auf dem ersten Griff (a'), eine Verlägerung des Trennungshebels beinhaltet.

8. Vorrichtung nach Anspruch 6, dadurch gekennzeichnet, daß eine zweite Krampe (12), die zu dem Zapfen (13) auf dem ersten statischen Griff (a') drehbar ist, auf dem entsprechenden gezahntem Teil (8) der Klinge (7) aufliegt.

9. Vorrichtung nach Anspruch 8, dadurch gekennzeichnet, daß besagte zweite Krampe (12) eventuell elastisch zurückgezogen wird und auf der gegenüberliegenden Seite innen eine Ausdehnung (12') des Hebels zum Lösen der besagten Krampe durch das Rad (7') vorsieht.

10. Vorrichtung nach einem der vorgehenden Ansprüchen, dadurch gekennzeichnet, daß zwischen den beiden Griffen (a') und (a'') eine Druckfeder (14) vorgesehen wird, deren Enden auf beiden Frontseiten der beiden Griffe (a', a'') verankert ist.

11. Vorrichtung nach einem der vorhergehenden Ansprüchen, gekennzeichnet dadurch, daß die Kabel (2) auf der Innenoberfläche, sowohl als auf der Brechklinge (7) entlang des unteren Randes, eine Reihe Befestigungsrippen und -nuten (4) vorsieht.

## Revendications

1. Dispositif destiné à casser progressivement la coquille en bois de fruits de la famille des drupes, incluant une double poignée, caractérisé en ce que la première poignée est statique (a') et que la deuxième poignée est dynamique (a''), la première poignée (a'), incluant d'un côté un support en forme de cuillère (2), pour maintenir le fruit (B), longitudinalement traversée par une ouverture (3); la deuxième poignée (a''), étant reliée(9) à la dite première poignée (a') par l'interposition d'une lame de rupture mobile (7), laquelle est (7) pourvue d'un système de crémaillère progressivement abattable surpassant le dit support en forme de cuillère (2), permettant la remise en place, ou la libération, de la deuxième poignée dynamique (a'') et agissant sur un cliquet insistant sur la rotation (7') de la lame, la dite lame (7), est ramenée de façon élastique dans une position initiale, pour être éventuellement débloquée par un deuxième dispositif de blocage (12) situé le long de la première poignée statique (a'').

2. Dispositif, selon la revendication 1., caractérisé en ce que la première poignée (a'), est pourvue d'un côté (1) d'une surface de prise élaborée de façon anatomique, et à l'extrémité de l'autre côté interne , d'une sorte de cuillère (2) divisée au milieu par une ouverture longitudinale (3), ayant la forme d'une fourchette.

3. Dispositif, selon les revendications 1. et 2., caractérisé en ce que la deuxième poignée (a'') du type dynamique, inclue d'un côté (5) une poignée spéculaire à la surface de prise (1) de la première poignée (a'), et de l'autre côté, est reliée(6) à la dite première poignée (a') au-dessus du barycentre.

4. Dispositif, selon la revendication 3, caractérisé en ce que le pivot (6) se trouve à la fin de la surface de prise (1), situé entre le début et la fin du support en forme de cuillère (2).

5. Dispositif, selon la revendication 3, caractérisé en ce que le pivot (6), indépendamment de la deuxième poignée (a'') maintient la lame de rupture (7), dont la forme est légèrement courbée.

6. Dispositif, selon la revendication 5, caractérisé en ce que la lame (7) à engrenage, est capable de tourner indépendamment de la deuxième poignée (a''), et inclue une roue (7'), dont le pourtour est muni de dents (8).

7. Dispositif, selon la revendication 6, caractérisé en ce que sur les dites dents (8), insiste une première hélice (9), se remettant en place de façon mécanique, reliée (10) à la première poignée (a'), et incluant de l'autre côté (9') un prolongement du levier de déconnexion.

8. Dispositif, selon la revendication 7, caractérisé en ce qu'une deuxième hélice (12), reliée au pivot (13) de la première poignée statique (a'), insiste sur la partie dentée correspondante (8) de la lame (7).

9. Dispositif, selon la revendication 8, caractérisé en ce que la dite deuxième hélice (12) se remettant en place de façon mécanique, est pourvue du côté interne opposé d'une extension (12') du levier de déblocage de la dite hélice par le biais de la roue (7').

10. Dispositif, selon chacune des revendications précédantes, caractérisé en ce que, les deux poignées (a') et (a'') sont munies d'un ressort de compression (14), dont les extrémités sont reliées aux côtés transversaux des deux poignées (a', a'').

11. Dispositif, selon chacune des revendications précédantes, caractérisé en ce que la cuillère (2) sur la surface interne, ainsi que la lame de rupture (7) le long du bord inférieur, pourvoit une série de nervures de serrage ou fentes (4).
